# EUROPÄISCHE PATENTSCHRIFT

(11) **EP 1 034 328 B1**
(45) Veröffentlichungstag und Bekanntmachung des Hinweises auf die Patenterteilung: **13.03.2002**
(21) Anmeldenummer: 98965215.1
(22) Anmeldetag: 01.12.1998
(51) Int. Cl.: D04H 1/54, D04H 1/42

(54) **VERWENDUNG VON MELAMINHARZFASERN UND ISOLIERMATERIALIEN AUF BASIS VON MELAMINHARZFASERN UND POLY(ALKYLENTEREPHTHALAT)FASERN**
UTILIZATION OF MELAMINE RESIN FIBERS AND INSULATING MATERIALS BASED ON MELAMINE RESIN FIBERS AND POLY(ALKYLENE TEREPHTHALATE) FIBERS
UTILISATION DE FIBRES DE RESINE MELAMINIQUE ET MATERIAUX ISOLANTS A BASE DE FIBRES DE RESINE MELAMINIQUE ET DE FIBRES DE POLY (ALKYLENE- TEREPHTALATE)

(30) Priorität: 04.12.1997 DE 19753834
(43) Veröffentlichungstag der Anmeldung: 13.09.2000
(73) Patentinhaber: BASF AKTIENGESELLSCHAFT, 67056 Ludwigshafen (DE)
(72) Erfinder: BERBNER, Heinz, D-69509 Mörlenbach (DE); OTT, Karl, D-68723 Plankstadt (DE)
(74) Vertreter: Kinzebach, Werner, Dr.
(86) Internationale Anmeldenummer: EP9807784
(87) Internationale Veröffentlichungsnummer: WO9929948

(56) Entgegenhaltungen:
- EP-A- 0 557 580
- WO-A-97/01661
- DE-A- 19 600 979
- DATABASE WPI Section Ch, Week 9802 Derwent Publications Ltd., London, GB; Class A17, AN 98-016949 XP002098478 & RO 112 038 B (SC TOMIRIS SA) , 30. April 1997

## Beschreibung

Die vorliegende Erfindung betrifft die Verwendung von Melaminharzfasern und Isoliermaterialien auf der Basis von Melaminharzfasern und Poly(alkylenterephthalat)fasern und Verfahren zu ihrer Herstellung.

Zur Herstellung von Dämmmaterialien für den Baubereich, z. B. zur Wärme- und Schallisolierung von Gebäuden und Gebäudeteilen werden häufig Isoliermatten auf Basis von Glas- oder Mineralfasern verwendet. Diese Materialien verfügen zwar im Allgemeinen über gute Dämmeigenschaften, besitzen jedoch den Nachteil, dass sie spröde sind, leicht brechen und dabei unter Umständen sehr kurzfaserige Bruchstücke freisetzen. Somit lassen sie sich zum einen nicht immer leicht zu Fasermatten verarbeiten, zum anderen gelten lungengängige Mikrofasern als gesundheitlich problematisch. Weiterhin weisen anorganische Materialien im Allgemeinen eine höhere Dichte auf als organische, was zu schwereren Produkten und somit zu höheren Transportkosten führt.

Es besteht somit ein Bedarf an einem Isoliermaterial auf Basis organischer Fasern, welches in seinen Dämmeigenschaften weitgehend den anorganischen Materialien entspricht, einfach herzustellen und leicht zu verarbeiten ist.

Die DE-A 31 47 308 und die EP-A 80 655 beschreiben Isoliermaterialien aus Melaminharz-Fasermatten, die folgende Eigenschaften aufweisen:
a) die Dicke liegt zwischen 20 und 200 mm,
b) die Dichte liegt zwischen 10 und 150 g l⁻¹,
c) die Wärmeleitfähigkeit nach DIN 52 612 ist geringer als 0,05 W m⁻¹ K⁻¹,
d) die Schallabsorption nach DIN 52 215-63 bei 2500 Hz, umgerechnet von senkrechten auf stationären Schalleinfall, ist größer als 90 %,
e) das Rückstellvermögen, gemessen an einer 100 mm dicken Matte, die innerhalb von 2 min auf 30 mm gestaucht und bei dieser Dicke 24 Stunden lang gepresst wurde, ist so hoch, dass die Matte bei Druckentlastung spontan auf eine Dicke von mehr als 80 mm rückfedert und nach 6 Stunden wieder eine Dicke von mehr als 98 mm erreicht hat,
f) das Brandverhalten ist so günstig, dass bei der Brandprüfung nach DIN 4102, Teil I, die Baustoffklasse B1 (schwerentflammbar) erreicht wird.

Als Melaminharze können dabei Melamin/Formaldehyd-Kondensationsprodukte eingesetzt werden, die neben Melamin noch bis zu 50 Gew.-% andere Duroplastbildner und neben Formaldehyd noch bis zu 50 Gew.-% andere Aldehyde einkondensiert enthalten können. Als Duroplastbildner können dabei alkylsubstituiertes Melamin, Harnstoff, Urethane, Carbonsäureamide, Dicyandiamid, Guanidin, Sulfurylamid, Sulfonsäureamid, aliphatische Amine sowie Phenole und dessen Derivate eingesetzt werden. Als Aldehyde können zum Beispiel Acetaldehyd, Trimethylolacetaldehyd, Acrolein, Benzaldehyd, Furfural, Glyoxal, Phthalaldehyd und Terephthalaldehyd eingesetzt werden. Bevorzugt sind jedoch unmodifizierte Melamin/Formaldehyd-Kondensationsprodukte. Die Isoliermaterialien auf Basis dieser Melaminharz-Fasermatten können zum Wärme- und Schallschutz von Gebäuden und Gebäudeteilen verwendet werden.

Die EP-A 523 485 beschreibt Kondensationsprodukte, die durch Kondensation eines Gemisches aus a) Melamin, b) substituierten Melaminen und unsubstituierten und/oder substituierten Phenolen mit Formaldehyd oder Formaldehyd-liefernden Verbindungen erhältlich sind, ein Verfahren zu deren Herstellung und deren Verwendung zur Herstellung von Fasern. Diese Kondensationsprodukte zeichnen sich durch eine verbesserte Hydrolysestabilität und eine reduzierte Formaldehyd-Emission aus.

Der Erfindung liegt die Aufgabe zugrunde, neue vorteilhafte Verwendungszwecke für Melaminharzfasern aufzufinden, die z. B. nach der EP-A-523 485 erhältlich sind.

Gegenstand der vorliegenden Erfindung ist daher die Verwendung von modifizierten Melaminharzfasern, die erhältlich sind durch Kondensation eines Gemisches, umfassend
(A) 90 bis 99,9 Mol-% eines Gemisches, umfassend
   (a) 30 bis 99,9 Mol-% Melamin und
   (b) 1,0 bis 70 Mol-% eines substituierten Melamins der allgemeinen Formel I 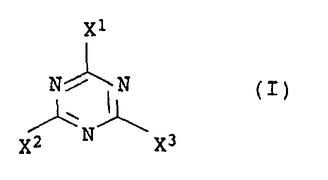
   worin X¹, X² und X³ ausgewählt sind unter -NH₂, -NHR¹ und -NR¹R², wobei X¹, X² und X³ nicht gleichzeitig für -NH₂ stehen, und R¹ und R² unabhängig voneinander ausgewählt sind unter Hydroxy-C₂-C₂₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen der Formel I, und
(B) 0,1 bis 10 Mol-%, bezogen auf (A) und (B), einer Verbindung ausgewählt unter Phenol, das gegebenenfalls mit Resten, ausgewählt unter C₁-C₉-Alkyl und Hydroxy, substituiert ist; C₁-C₄-Alkanen, die mit zwei oder drei Phenol-Gruppen substituiert sind; Di(hydroxyphenyl)sulfonen oder Mischungen davon,
mit Formaldehyd oder Formaldehyd-liefernden Verbindungen, wobei das Molverhältnis von Melaminen zu Formaldehyd im Bereich von 1:1,15 bis 1:4,5 liegt, als und zur Herstellung von Isoliermaterial zum Wärme- und/oder Schallschutz. Geeignete modifizierte Melaminharzfasern sind z. B. in der EP-A-523 485 beschrieben. Die Fasern können nach üblichen, dem Fachmann bekannten Verfahren zu Wärme- und/oder Schallschutzformkörpern verarbeitet werden. Solche Verfahren werden im Folgenden noch eingehender beschrieben. Vorteilhafterweise weisen die in der EP-A-523 485 beschriebenen Fasern aus modifizierten Melamin-Formaldehydharzen einen textileren Griff als herkömmliche Melaminharzfasern auf. Sie sind weniger spröde und brechen nicht so leicht, so dass bei der Verarbeitung zu Formkörpern, wie z. B. Fasermatten, im Allgemeinen weniger kurzfaserige Bruchstücke und Staub freigesetzt werden. Zudem sind sie allgemein auch hautfreundlicher als die herkömmlichen Fasern. Isoliermaterialien auf Basis der in der EP-A-523 485 beschriebenen Melaminharzfasern eignen sich vorzugsweise zum Wärmeund/oder Schallschutz von Gebäuden und Gebäudeteilen. Sie eignen sich weiterhin zum wärme- und/oder Schallschutz im Maschinenbau, der Kühltechnik, zur Isolierung von flüssigkeits- oder gasführenden Rohren innerhalb und außerhalb von Gebäuden etc.

Nach einer geeigneten Ausführungsform können die zuvor genannten Melaminharzfasern gemeinsam mit Poly(alkylenterephthalat)fasern verwendet werden. Dafür geeignete Poly(alkylenterephthalat)fasern sind die im Folgenden beschriebenen.

Gegenstand der vorliegenden Erfindung ist weiterhin ein Isoliermaterial, enthaltend
a) 5 bis 95 Gew.-% Melaminharzfasern,
b) 5 bis 95 Gew.-% Poly(alkylenterephthalat)fasern, das gewünschtenfalls
c) bis zu 30 Gew.-% weitere Fasern und/oder
d) bis zu 20 Gew.-% Zusatzstoffe
enthalten kann.

### Komponente a)

Geeignete Melaminharzfasern sind nichtmodifizierte Melaminharzfasern und vorzugsweise modifizierte Melaminharzfasern und Gemische davon.

Melamin/Formaldehyd-Kondensationsprodukte, die sich für die Herstellung von Melaminharz-Fasermatten eignen, sind in der EP-A 0 080 655 beschrieben, auf die hiermit in vollem Umfang Bezug genommen wird. Die Melamin-Formaldehyd-Kondensationsprodukte können neben Melamin bis zu 50 Gew.-%, vorzugsweise bis zu 20 Gew.-% anderer Duroplastbildner, und neben Formaldehyd bis zu 50 Gew.-%, vorzugsweise bis zu 20 Gew.-% anderer Aldehyde einkondensiert enthalten.

Geeignete andere Duroplastbildner sind dabei z. B. alkylsubstituiertes Melamin, Harnstoff, Urethane, Carbonsäureamide, Dicyandiamid, Guanidin, Sulfurylamid, Sulfonsäureamid, aliphatische Amine sowie Phenol und dessen Derivate.

Geeignete andere Aldehyde sind z. B. Acetaldehyd, Trimethylolacetaldehyd, Acrolein, Benzaldehyd, Furfural, Glyoxal, Phthalaldehyd und Terephthalaldehyd.

Das Molmengenverhältnis von Duroplastbildner zu Aldehyd liegt im Allgemeinen in einem Bereich von etwa 1:1,5 bis etwa 1:4,5. Werden unmodifizierte Melamin/Formaldehyd-Kondensate eingesetzt, so liegt das Molmengenverhältnis im Allgemeinen in einem Bereich von etwa 1:2,5 bis etwa 1:3,5.

Die Herstellung solcher Fasern kann z. B. durch Verspinnen einer hochkonzentrierten, wässrigen Lösung eines Melamin-Aldehyd-Vorkondensats erfolgen. Solche Verfahren sind z. B. in der DE-A 23 64 091 beschrieben, wobei ein Schleuderteller oder eine Düse eingesetzt werden kann. Die Fasern werden vorgetrocknet, gegebenenfalls gereckt und schließlich das Melaminharz bei Temperaturen von etwa 150 bis etwa 250 °C gehärtet. Dabei können übliche Säuren, wie z. B. Schwefelsäure, Salzsäure, Essigsäure oder vorzugsweise Ameisensäure als Härtungskatalysatoren in einer Menge von etwa 0,1 bis 5,0 Gew.-% der wässrigen Lösung des Vorkondensats zugesetzt werden. Es ist ebenfalls möglich, den Härtungskatalysator nach dem Verspinnen, zusammen mit der Luft beim Härtungsvorgang, zuzugeben.

Gewünschtenfalls können die Fasern mit Bindemitteln versehen werden, die eine Verbindung der Einzelfaser an den Knotenstellen der Fasermatte herstellen. Geeignete Bindemittel sind dabei z. B. Melamin-, Phenol- oder Harnstoffharze, die im Allgemeinen in Mengen von etwa 1 bis 8 Gew.-%, bezogen auf das Fasergewicht, eingesetzt werden. Das Bindemittel kann dabei z. B., direkt nach der Herstellung der Fasern, als z. B. wässrige Dispersion auf diese aufgesprüht werden.

Die so erhaltenen Fasern sind im Allgemeinen etwa 3,0 bis 30 µm dick und etwa 10 bis 150 mm lang. Ihre Zugfestigkeit liegt in einem Bereich von etwa 100 bis 1000 N mm⁻² und ihre Bruchdehnung zwischen etwa 3 und 30 %.

Nach einer bevorzugten Ausführungsform werden als Komponente a) modifizierte Melaminharzfasern eingesetzt, wie sie in der EP-A 523 485 beschrieben sind, auf die hiermit in vollem Umfang Bezug genommen wird.

Diese Melaminharzfasern enthalten als Monomerbaustein (A) 90 bis 99,9 Mol-% eines Gemisches, umfassend im Wesentlichen 30 bis 99, bevorzugt 50 bis 95, besonders bevorzugt 85 bis 95 Mol-% Melamin und 1 bis 70, bevorzugt 1 bis 50, besonders bevorzugt 5 bis 15 Mol-% eines substituierten Melamins der Formel I oder Mischungen substituierter Melamine der Formel I.

Als weitere Monomerbausteine (B) enthalten die bevorzugten Melaminharzfasern a) 0,1 bis 10 Mol-%, vorzugsweise von 0,1 bis 9,5 Mol-%, bezogen auf die Gesamtmolzahl an Monomerbausteinen (A) und (B), eines Phenols oder eines Gemisches von Phenolen.

Die bevorzugten Melaminharzfasern a) sind üblicherweise durch Umsetzung der Komponenten (A) und (B) mit Formaldehyd oder Formaldehyd-liefernden Verbindungen und anschließendes Verspinnen erhältlich, wobei das Molverhältnis von Melaminen zu Formaldehyd im Bereich von etwa 1:1,15 bis 1:4,5, bevorzugt von etwa 1:1,8 bis 1:3,0 liegt.

Als substituierte Melamine der allgemeinen Formel I 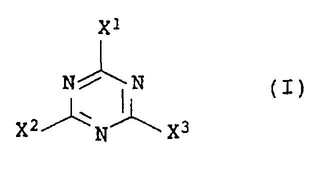 kommen solche in Betracht, bei denen X¹, X² und X³ ausgewählt sind unter -NH₂, -NHR¹ und -NR¹R², wobei X¹, X² und X³ nicht gleichzeitig -NH₂ sind, und R¹ und R² unabhängig voneinander ausgewählt sind unter Hydroxy- C₂-C₁₀-alkyl, Hydroxy-C₂-C₄-alkyl-(oxa-C₂-C₄-alkyl)ₙ, mit n = 1 bis 5, und Amino-C₂-C₁₂-alkyl.

Hydroxy-C₂-C₁₀-alkyl steht vorzugsweise für Hydroxy-C₂-C₆-alkyl, wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl, wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Bei Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2, wie 5-Hydroxy-3-oxa-pentyl, 5-Hydroxy-3-oxa-2,5-dimethylpentyl, 5-Hydroxy-3-oxa-1,4-dimethylpentyl, 5-Hydroxy-3-oxa-1,2,4,5-tetramethylpentyl, 8-Hydroxy-3,6-dioxaoctyl.

Als Amino-C₂-C₁₂-alkyl-Gruppen kommen bevorzugt Amino-C₂-C₈-alkyl-Gruppen, wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen:
- mit der 2-Hydroxyethylamino-Gruppe substituierte Melamine, wie 2-(2-Hydroxyethylamino)-4,6-diamino-1,3,5-triazin, 2,4-Di-(2-hydroxyethylamino)-6-amino-1,3,5-triazin, 2,4,6-Tris-(2-hydroxyethylamino)-1,3,5-triazin,
- mit der 2-Hydroxyisopropylamino-Gruppe substituierte Melamine, wie 2-(2-Hydroxyisopropylamino)-4,6-diamino-1,3,5-triazin, 2,4-Di-(2-hydroxyisopropylamino)-6-amino-1,3,5-triazin 2,4,6-Tris-(2-hydroxyisopropylamino)-1,3,5-triazin,
- mit der 5-Hydroxy-3-oxapentylamino-Gruppe substituierte Melamine, wie 2-(5-Hydroxy-3-oxapentylamino)-4,6-diamino-1,3,5-triazin, 2,4,6-Tris-(5-hydroxy-3-oxapentylamino)-1,3,5-triazin, 2,4-Di(5-hydroxy-3-oxapentylamino)-6-amino,1,3,5-triazin,
- mit der 6-Aminohexylamino-Gruppe substituierte Melamine, wie 2-(6-Aminohexylamino)-4,6-diamino-1,3,5-triazin, 2,4-Di-(6-aminohexylamino)-6-amino-1,3,5-triazin, 2,4,6-Tris-(6-aminohexylamino)-1,3,5-triazin oder
- Gemische dieser Verbindungen, beispielsweise ein Gemisch aus 10 Mol-% 2-(5-Hydroxy-3-oxapentylamino)-4,6-diamino-1,3,5-triazin, 50 Mol-% 2,4-Di-(5-hydroxy-3-oxapentylamino)-6-amino-1,3,5-triazin und 40 Mol-% 2,4,6-Tris-(5-hydroxy-3-oxapentylamino)-1,3,5-triazin.

Als Phenole (B) eignen sich ein oder zwei Hydroxygruppen enthaltende Phenole, die gegebenenfalls mit Resten, ausgewählt unter C₁-C₉-Alkyl und Hydroxy substituiert sind sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht: Phenol, 4-Methylphenol, 4-tert.-Butylphenol, 4-n-Octylphenol, 4-n-Nonylphenol, Brenzcatechin, Resorcin, Hydrochinon, 2,2-Bis(4-hydroxyphenyl)propan, Bis(4-hydroxyphenyl)sulfon, besonders bevorzugt Phenol, Resorcin und 2,2-Bis(4-hydroxyphenyl)propan.

Formaldehyd setzt man in der Regel als wässrige Lösung mit einer Konzentration von zum Beispiel 40 bis 50 Gew.-% oder in Form von Verbindungen, die bei der Umsetzung mit (A) und (B) Formaldehyd liefern, beispielsweise als oligomeren oder polymeren Formaldehyd in fester Form, wie Paraformaldehyd, 1,3,5-Trioxan oder 1,3,5,7-Tetroxan, ein.

Zur Herstellung der bevorzugten Melaminharzfasern a) polykondensiert man üblicherweise Melamin, gegebenenfalls substituiertes Melamin und gegebenenfalls Phenol zusammen mit Formaldehyd bzw. Formaldehyd-liefernden Verbindungen. Man kann dabei alle Komponenten gleich zu Beginn vorlegen oder man kann sie portionsweise und sukzessive zur Reaktion bringen und den dabei gebildeten Vorkondensaten nachträglich weiteres Melamin, substituiertes Melamin oder Phenol zufügen.

Die Polykondensation führt man in an sich bekannter Weise durch, wie sie z. B. in der EP-A 355 760 oder in Houben-Weyl, Bd. 14/2, S. 357 ff beschrieben wird.

Die Reaktionstemperatur wählt man dabei im Allgemeinen in einem Bereich von 20 bis 150 °C, bevorzugt von 40 bis 140 °C.

Der Reaktionsdruck ist in der Regel unkritisch. Man arbeitet im Allgemeinen in einem Bereich von 100 bis 500 kPa, bevorzugt 100 bis 300 kPa.

Man kann die Reaktion mit oder ohne Lösungsmittel durchführen. In der Regel setzt man bei Verwendung von wässriger Formaldehydlösung kein Lösungsmittel zu. Bei Verwendung von in fester Form gebundenem Formaldehyd wählt man als Lösungsmittel üblicherweise Wasser, wobei die verwendete Menge in der Regel im Bereich von 5 bis 40, bevorzugt von 15 bis 20 Gew.-%, bezogen auf die Gesamtmenge an eingesetzten Monomeren, liegt.

Ferner führt man die Polykondensation im Allgemeinen in einem pH-Bereich oberhalb von 7 aus. Bevorzugt ist der pH-Bereich von 7,5 bis 10,0, besonders bevorzugt von 8 bis 9.

Des weiteren kann man dem Reaktionsgemisch geringe Mengen üblicher Zusätze, wie Alkalimetallsulfite, z. B. Natriumdisulfit und Natriumsulfit, Alkalimetallformiate, z. B. Natriumformiat, Alkalimetallcitrate, z. B. Natriumcitrat, Phosphate, Polyphosphate, Harnstoff, Dicyandiamid oder Cyanamid hinzufügen. Man kann sie als reine Einzelverbindungen oder als Mischungen untereinander, jeweils in Substanz oder als wässrige Lösung vor, während oder nach der Kondensationsreaktion zusetzen.

Andere Modifizierungsmittel sind Amine und Aminoalkohole, wie Diethylamin, Ethanolamin, Diethanolamin oder 2-Diethylaminoethanol.

Als weitere Zusatzstoffe zur Herstellung der Melaminharzfasern a) kommen Füllstoffe oder Emulgatoren in Betracht. Als Füllstoffe kann man beispielsweise faser- oder pulverförmige anorganische Verstärkungsmittel oder Füllstoffe, wie Glasfasern, Metallpulver, Metallsalze oder Silikate, z. B. Kaolin, Talkum, Schwerspat, Quarz oder Kreide, ferner Pigmente und Farbstoffe einsetzen. Als Emulgatoren verwendet man in der Regel die üblichen nichtionogenen, anionenaktiven oder kationaktiven organischen Verbindungen mit langkettigen Alkylresten.

Die Polykondensation kann man diskontinuierlich oder kontinuierlich, beispielsweise in einem Extruder (siehe EP-A 355 760), nach an sich bekannten Methoden durchführen.

Zur Herstellung von Fasern verspinnt man in der Regel das erfindungsgemäße Melamin-Harz in an sich bekannter Weise, beispielsweise nach Zusatz eines Härters, üblicherweise Säuren, wie Ameisensäure, Schwefelsäure oder Ammoniumchlorid, bei Raumtemperatur in einer Rotationsspinnmaschine und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A-23 64 091 eingehend beschrieben.

### Komponente b)

Geeignete Poly(alkylenterephthalat)fasern sind vorzugsweise ausgewählt unter Poly(ethylenterephthalat)fasern, Poly(butylenterephthalat)fasern und Mischungen davon. Bevorzugt werden Poly(ethylenterephthalat)fasern eingesetzt. Der Anteil an Komponente b) an den erfindungsgemäßen Isoliermaterialien beträgt im Allgemeinen etwa 5 bis 95 Gew.-%, bevorzugt etwa 20 bis 90 Gew.-%.

Nach einer bevorzugten Ausführungsform werden als Poly(ethylenterephthalat)fasern Bikomponentenfasern mit einem Mantel-/Kern-Aufbau eingesetzt. Derartige Fasern (Schmelzbindefasern) und Verfahren zu ihrer Herstellung sind in Franz Fourné, Synthetische Fasern, Wissenschaftliche Verlagsgesellschaft, Stuttgart 1964 und in Herrmann Ludewig, Polyesterfasern, Akademie Verlag, Berlin 1975, beschrieben, auf die hiermit in vollem Umfang Bezug genommen wird. Diese Bikomponentenfasern umfassen einen hochschmelzenden Polyesterkern, der im Allgemeinen ein Poly(ethylenterephthalat)-Homopolymer umfasst. Die Schmelztemperatur des Kerns liegt dabei im Allgemeinen bei etwa 200 bis 300 °C, bevorzugt etwa 230 bis 280 °C. Dieser hochschmelzende Kern ist von einem Mantel mit einer geringerer Schmelztemperatur umgeben. Dieser Mantel umfasst z. B. Copolyester, die neben der Terephthalsäure weitere aromatische und/oder aliphatische Dicarbonsäuren und/oder neben Ethylenglykol weitere Diole einpolymerisiert enthalten, so dass die Eigenschaften in weiten Bereichen variiert werden können. Geeignete weitere aromatische Dicarbonsäuren sind zum Beispiel die Isophthalsäure. Geeignete weitere aliphatische Dicarbonsäuren sind z. B. C₃-C₁₂-Dicarbonsäuren, wie zum Beispiel Malonsäure, Bernsteinsäure, Adipinsäure, Sebacinsäure etc. Geeignete weitere Diole sind z. B. Propylenglykol, 1,4-Butandiol, 1,5-Pentandiol, Neopentylglykol, 1,6-Hexandiol, 2-Methyl-1,5-pentandiol, 2-Ethyl-1,4-butandiol, Polyalkylenglykole, zum Beispiel Polyethylenglykol und Polypropylenglykol, sowie die Alkoxylate von zweioder mehrwertigen Alkoholen. Dazu zählen z. B. ethoxylierte, propoxylierte und gemischt-ethoxylierte und -propoxylierte zwei- bis sechswertige Alkohole und Polyesterole. Der Alkoxylierungsgrad liegt dabei in der Regel in einem Bereich von 1 bis 300, bevorzugt 2 bis 150.

Die Schmelztemperatur des Mantels beträgt im Allgemeinen etwa 80 bis 150 °C, bevorzugt etwa 100 bis 130 °C.

Bei den bevorzugten Poly(ethylenterephthalat)fasern b) mit Mantel-/Kern-Aufbau beträgt der Titer der Einzelfaser im Allgemeinen etwa 1 bis 20 dtex, bevorzugt etwa 2 bis 15 dtex. 1 dtex bedeutet eine längenbezogene Masse von 1 g/10.000 m und entspricht bei einer Rundfaser einem Faserdurchmesser von etwas über 10 µm. Der Titer ist proportional dem Quadrat des Durchmessers.

Die Dichte dieser bevorzugten Komponenten b) liegt im Allgemeinen in einem Bereich von etwa 1,1 bis 1,6 g/cm³. Poly(alkylenterephthalat)fasern weisen im Allgemeinen eine sehr gute Alterungsbeständigkeit, eine gute Licht- und Wetterbeständigkeit, einen sehr guten Fäulniswiderstand sowie eine gute Säurebeständigkeit auf. Sie sind beständig gegen die meisten organischen Lösungsmittel und verfügen über eine hohe relative Nassfestigkeit, die vorzugsweise bei etwa 100 % liegt. Die Feuchtigkeitsaufnahme bei 95 % relativer Feuchte und 20 °C ist im Allgemeinen sehr gering und liegt in einem Bereich von maximal 1,0 %, bevorzugt maximal etwa 0,5 %.

Die erfindungsgemäß eingesetzten Poly(alkylenterephthalat)fasern werden im Allgemeinen ohne Flammschutzbehandlung eingesetzt. Die bevorzugt als Komponente b) eingesetzten Poly(ethylenterephthalat)fasern mit Mantel-/Kern-Aufbau weisen eine Selbstentzündungstemperatur nach DIN 51 794 von mindestens 450 °C, bevorzugt mindestens 500 °C auf. Die Zersetzungstemperatur liegt im Allgemeinen bei mindestens 270 °C, bevorzugt bei mindestens 300 °C.

Fasererzeugnisse aus Poly(alkylenterephthalat)fasern haben den Vorteil, ökologisch unbedenklich zu sein. Die eingesetzten Polyester sind gegenüber natürlich im Boden vorkommenden Stoffen inert und verrottungsbeständig.

Gewünschtenfalls können die Poly(alkylenterephthalat)fasern übliche Füllstoffe, wie zum Beispiel Glasfasern, Metallpulver, Silikate, Talkum, Schwerspat, Quarz oder Kreide, Titandioxid sowie Pigmente und Farbstoffe enthalten. Im Allgemeinen beträgt der Gewichtsanteil dieser Zusatzstoffe an der Komponente b) höchstens 20 Gew.-%, bevorzugt höchstens 10 Gew.-%, bezogen auf die Gesamtmenge der Komponente b).

Zur Herstellung von Fasern können die Poly(alkylenterephthalate) nach bekannten Verfahren versponnen werden. Geeignete Spinnprozesse, z. B. durch Schmelzspinnen, werden z. B. in A. Echte, Handbuch der technischen Polymerchemie, VCH Weinheim, 1993, S. 563 f. und in A. Franck, Kunststoff-Kompendium, Vogel-Buchverlag, 4. Auflage, 1996, S. 166 f., beschrieben. Zur Herstellung der als Komponente b) bevorzugt eingesetzten Bikomponentenfasern mit Mantel-/Kern-Aufbau können die Poly(ethylenterephthalate) und entsprechende Co-Polyester analog den Coextrudaten durch gemeinsames Spinnen der zwei unterschiedlichen Komponenten gewonnen werden. Vorzugsweise liegen diese Systeme dann als ungekräuselte Faser vor.

### Komponente c)

Die erfindungsgemäßen Isoliermaterialien können zusätzlich zur Komponente a) und b) bis zu 20 Gew.-% an weiteren Fasern enthalten. Geeignete weitere Fasern sind beispielsweise natürliche Fasern, wie Wolle und Baumwolle, oder synthetische Fasern, wie Polyamidfasern, Polyimid- und Aramidfasern, Polyacrylnitrilfasern, Cellulosefasern, wie Viskose etc. Vorzugsweise werden zur Herstellung der erfindungsgemäßen Isoliermaterialien keine zusätzlichen Fasern eingesetzt.

### Komponente d)

Die erfindungsgemäßen Isoliermaterialien können bis zu 20 Gew.-% an weiteren Zusatzstoffen umfassen. Dazu zählen z. B. die zuvor bei der Komponente a) genannten Bindemittel, welche die Verbindung der Einzelfasern an den Knotenstellen der Fasermatte herstellen. Geeignete Bindemittel sind Melamin-, Phenol- oder Harnstoffharze, die im Allgemeinen in einer Menge von etwa 1 bis 8 Gew.-%, bevorzugt 2 bis 5 Gew.-%, bezogen auf die Gesamtfasermenge, eingesetzt werden. Des weiteren können Bindemittel z. B. auf Basis von Arylaten verwendet werden. Diese Bindemittel enthalten üblicherweise auch Flammschutzmittel. Diese Bindemittel können gewünschtenfalls einer oder mehrerer der Faserkomponenten a), b) und/oder c) oder einer Mischung davon zugesetzt werden. Das Bindemittel kann dazu z. B. als wässrige Dispersion auf die Fasern aufgesprüht werden. Es kann übliche Füllstoffe enthalten, vorzugsweise solche, die die Flammfestigkeit erhöhen, wie Borate, Phosphate, vgl. vorne. Werden als Komponente b) Bikomponentenfasern eingesetzt, so ist vorzugsweise im Allgemeinen kein Bindemittelzusatz erforderlich.

Die Herstellung der erfindungsgemäß verwendeten Isoliermaterialien aus der Komponente a) erfolgt unmittelbar bei der Herstellung der Melaminharzfaser, in dem man die Faser nach Zugabe des Bindemittels auf einem Auftragsband in der gewünschten Dicke ablegt. Die Herstellung der erfindungsgemäßen Isoliermaterialien aus den zuvor genannten Komponenten a) bis d) erfolgt, indem man
i) die Komponenten a), b) sowie gegebenenfalls c) und/oder d), gegebenenfalls nach einer Vorbehandlung, mischt, gewünschtenfalls kardiert und zu einer Matte ablegt,
ii) die Matte erhitzt, und
iii) die getemperte Matte gegebenenfalls zurechtschneidet und/oder beschichtet.

### Schritt i)

Allgemein werden die Faserkomponenten a), b) sowie gegebenenfalls eingesetzte weitere synthetische Fasern c) nach dem Verspinnen durch übliche, dem Fachmann bekannte Verfahren gehärtet, verstreckt und gegebenenfalls noch weiteren üblichen Nachbehandlungsverfahren unterworfen. Danach können sie ebenfalls nach üblichen Verfahren zu Stapelfasern weiterverarbeitet werden. Diese Weiterverarbeitung umfasst zum einen gegebenenfalls eine Avivierung zur Ausrüstung der Faser, zum Beispiel um dieser antistatische Eigenschaften, Leitvermögen und/oder Haftvermögen zu verleihen. Weiterhin können die glatten Fasern gewünschtenfalls, z. B. durch Stauchkräuselung oder Nasskräuselung, gekräuselt (texturiert) werden. Werden als Komponente b) Poly(ethylenterephthalat)fasern in Mantel-/Kern-Aufbau eingesetzt, so sind diese vorzugsweise nicht gekräuselt. Abschließend werden die Fasern in einer Schneidemaschine zu Stapelfasern der gewünschten Länge geschnitten. Verfahren zur Herstellung von Stapelfasern und geeignete Apparaturen und Maschinen sind in Bela von Falkai, Synthesefasern, Verlag Chemie, Weinheim 1981, sowie in A. Echte, Handbuch der technischen Polymerchemie, VCH-Verlagsgesellschaft Weinheim, 1993, S. 563 f. beschrieben. Die einzelnen Komponenten a), b) sowie gegebenenfalls c) und/oder d) werden anschließend auf üblichen Fasermischapparaturen, wie sie z. B. in Vliesstoffe, Georg-Thieme-Verlag, beschrieben sind, gemischt. Diese Fasermischung wird danach nach üblichen Verfahren kardiert und zu einer Matte abgelegt oder mittels Flockenspeiser als Faserflocke zu einer Matte abgelegt. Vorrichtungen und Verfahren zum Kardieren von Fasern sind z. B. in Ullmanns Enzyklopädie der technischen Chemie, 3. Auflage, Band 17, 1966, S. 227 beschrieben.

### Schritt ii)

Die abgelegte Matte wird bei erhöhten Temperaturen, z. B. in einem Bereich von etwa 100 bis 300 °C, getempert, um gegebenenfalls das Melaminharz vollständig auszuhärten, aus dem Produktionsprozess gegebenenfalls noch vorhandenes Wasser zu verdampfen, und um gegebenenfalls eine Verbindung der Einzelfasern herzustellen. Um letzteres zu erzielen, können den Fasern, wie zuvor beschrieben, Bindemittel zugesetzt werden. Werden als Komponente b) Poly(ethylenterephthalat)fasern in Form einer Bikomponentenfaser eingesetzt, so wird die abgelegte Matte bei einer Temperatur höher als die Schmelztemperatur des Mantels und niedriger als die Schmelztemperatur des Kerns getempert, wobei die Fasern zu einer stabilen, elastischen Matte verbunden werden.

### Schritt iii)

Abschließend können die erfindungsgemäßen Isoliermaterialien in Mattenform nach üblichen Verfahren zurechtgeschnitten und gegebenenfalls beschichtet (kaschiert) werden. Als Beschichtungsmaterial können Metallfolien, z. B. aus Aluminium, organische Dispersionen mit Füllstoffen sowie anorganische Dispersionen bzw. Emulsionen verwendet werden.

Die Dicke der erfindungsgemäßen Isoliermaterialien in Form von Matten liegt im Allgemeinen in einem Bereich von 20 bis 200 mm, bevorzugt in einem Bereich von 50 bis 100 mm. Die Dichte liegt in einem Bereich von 10 bis 150 gl⁻¹, bevorzugt in einem Bereich von 15 bis 50 gl⁻¹.

Vorteilhafterweise zeichnen sich die erfindungsgemäßen Isoliermaterialien durch gute anwendungstechnische Eigenschaften aus. So beträgt die Wärmeleitfähigkeit, gemessen nach DIN 52 612 höchstens 0,045 W m⁻¹ K⁻¹, vorzugsweise höchstens 0,04 W m⁻¹ K⁻¹.

Die Schallabsorption, gemessen nach DIN 52 215-83, umgerechnet von senkrechtem auf stationären Schalleinfall, beträgt mindestens 92 %, bevorzugt mindestens 95 %.

Die Bestimmung des Rückstellvermögens erfolgt an einer Matte von 100 mm Dicke. Liegen die erfindungsgemäßen Isoliermaterialien in einer dickeren Matte vor, so werden diese entsprechend zurechtgeschnitten, bei dünneren Matten werden mehrere zusammengelegt.

Wird eine 100 mm dicke Matte innerhalb von 2 Minuten auf 30 mm gestaucht und bei dieser Dicke 24 Stunden lang gepresst, so ist das Rückstellvermögen bei den erfindungsgemäßen Isoliermaterialien so hoch, dass die Matte bei Druckentlastung spontan ein Rückstellvermögen von mindestens 80 %, bevorzugt mindestens 90 % aufweist. Das Rückstellvermögen nach 6 Stunden beträgt bei den erfindungsgemäßen Isoliermaterialien im Allgemeinen mindestes 98 %, vorzugsweise mindestens 99 %. Insbesondere wird ein Rückstellvermögen von mindestens 98 %, bevorzugt von mindestens 99 %, auch schon nach einer kürzeren Zeit, z. B. nach etwa 30 Minuten, erreicht. Ein gutes Rückstellvermögen ist wichtig für den Transport, die Lagerung und das Verlegen der Matten. Die Mattenbahnen werden nach ihrer Herstellung und Konfektionierung im Allgemeinen aufgerollt und dabei stark zusammengepresst, um das Volumen beim Transport und bei der Lagerung zu verringern. Beim Verlegen werden sie wieder ausgerollt, wobei sie möglichst rasch wieder ihre ursprüngliche Dicke und damit auch die ursprüngliche Dichte annehmen sollen. Zudem wird bei einem ungenügenden Rückstellvermögen und der sich damit ergebenen erhöhten Dichte die Isolierwirkung herabgesetzt.

Die erfindungsgemäßen Isoliermaterialien erreichen bei der Brandstoffprüfung nach DIN 4102, Teil 1, Baustoffklasse B1 (schwerentflammbar).

Die erfindungsgemäßen Isoliermaterialien, z. B. in Form von Fasermatten, können zum Wärme- und Schallschutz von Gebäuden und Gebäudeteilen verwendet werden. Insbesondere eignen sie sich zum Isolieren von Dächern.

Die Erfindung wird anhand der folgenden, nichteinschränkenden Beispiele näher erläutert.

### Beispiele

Die in den Beispielen angegebenen Viskositätswerte werden mit einem Kegel/Platte-Viskosimeter (Fa. Epprecht Instruments + Controls, Messkegel "Typ D") bei einem Schergefälle von 20 s⁻¹ bei einer Temperatur von 20 °C bestimmt.

Das Rückstellvermögen wurde bestimmt an einer 100 mm dicken Matte, die innerhalb von 2 Minuten auf 30 mm gestaucht und bei dieser Dicke 24 Stunden lang gepresst wurde.

Die Wärmeleitfähigkeit wurde bestimmt nach DIN 52 612.

Die Schallabsorption wurde bestimmt nach DIN 52 215 bei 2000 Hz.

### Beispiel 1

Melaminharz mit 3 Mol-% Phenol nach der EP-A-0 523 485

1791,7 g (14,22 mol) Melamin und 626,1 g einer 80 gew.-%igen, wässrigen Lösung von 2,4,6-Tris-(5-hydroxy-3-oxa-pentylamino)-1,3,5-triazin (1,52 mol) und 44,6 g (0,47 mol) Phenol werden zusammen mit 557,9 g Paraformaldehyd, 7,0 g 2-Diethylaminoethanol und 1093,8 g einer 40 gew.-%igen wässrigen Formaldehydlösung gemischt. Die Reaktionsmischung wird dann solange zum Rückfluss erhitzt, bis sie eine Viskosität von 500 Pa·s aufweist.

### Beispiel 2

80 Teile modifizierte Melaminharzfasern auf Basis eines Melaminharzes aus Beispiel 1 und 20 Teile Poly(ethylenterephthalat)stapelfasern mit Mantel-/Kern-Aufbau (Schmelzpunkt Kern: etwa 250 °C; Schmelzpunkt Mantel: etwa 115 °C mit einem Titer von 4 dtex und einer Länge von 50 mm) werden mittels üblicher Fasermischanlage gemischt, kardiert und mittels eines Kreuzlegers zu einer Matte von 100 mm Dicke abgelegt. Diese Matte wird dann in einem Wärmekanal bei einer Temperatur von 160 °C getempert. Dabei schmilzt der Mantel der Poly(ethylenterephthalat)stapelfaser und verbindet auf diese Weise die Fasern zu einer stabilen, elastischen Matte.

Anwendungstechnische Eigenschaften:
- Rückstellvermögen:
   spontan: 95 %
   nach 30 Minuten: 100 %
- Wärmeleitfähigkeit nach DIN 52 612: 0,035 W m⁻¹ K⁻¹
- Schallabsorptionsgrad nach DIN 52 215 bei 2000 Hz: 98

## Patentansprüche

1. Verwendung von modifizierten Melaminharzfasern, die erhältlich sind durch Kondensation eines Gemisches, umfassend
(A) 90 bis 99,9 Mol-% eines Gemisches, umfassend
(a) 30 bis 99,9 Mol-% Melamin und
(b) 1,0 bis 70 Mol-% eines substituierten Melamins der allgemeinen Formel I 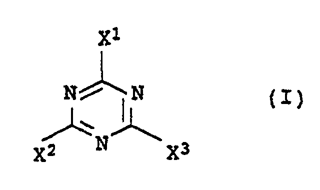 worin X¹, X² und X³ ausgewählt sind unter -NH₂, -MHR¹ und -NR¹R², wobei X¹, X² und X³ nicht gleichzeitig für -NH₂ stehen, und R¹ und R² unabhängig voneinander ausgewählt sind unter Hydroxy-C₂-C₂₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen der Formel I, und
(B) 0,1 bis 10 Mol-%, bezogen auf (A) und (B), einer Verbindung ausgewählt unter Phenol, das gegebenenfalls mit Resten, ausgewählt unter C₁-C₉-Alkyl und Hydroxy, substituiert ist; C₁-C₄-Alkanen, die mit zwei oder drei Phenol-Gruppen substituiert sind; Di(hydroxyphenyl)sulfonen oder Mischungen davon,
mit Formaldehyd oder Formaldehyd-liefernden Verbindungen, wobei das Molverhältnis von Melaminen zu Formaldehyd im Bereich von 1:1,15 bis 1:4,5 liegt, zur Herstellung von Isoliermaterial in Form von Matten mit einer Dichte im Bereich von 10 bis 150 gl⁻¹ zum Wärme- und/oder Schallschutz.

2. Verwendung nach Anspruch 1, gemeinsam mit Poly(alkylenterephthalat)fasern.

3. Isoliermaterial in Form von Matten mit einer Dichte im Bereich von 10 bis 150 gl⁻¹, enthaltend
a) 5 bis 95 Gew.-% Melaminharzfasern und
b) 5 bis 95 Gew.-% Poly(alkylenterephthalat)fasern.

4. Isoliermaterial nach Anspruch 3, welches c) bis zu 30 Gew.-% weitere Fasern und/oder d) bis zu 20 Gew.-% Zusatzstoffe enthält.

5. Isoliermaterial nach einem der vorhergehenden Ansprüche, worin die Melaminharzfasern modifiziert und erhältlich sind durch Kondensation eines Gemisches, umfassend
(A) 90 bis 99,9 Mol-% eines Gemisches, umfassend
(a) 30 bis 99,9 Mol-% Melamin und
(b) 1,0 bis 70 Mol-% eines substituierten Melamins der allgemeinen Formel I 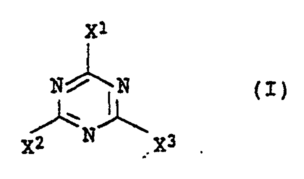 worin X¹, X² und X³ ausgewählt sind unter -NH₂, -NHR¹ und -NR¹R², wobei X¹, X² und X³ nicht gleichzeitig für -NH₂ stehen, und R¹ und R² unabhängig voneinander ausgewählt sind unter Hydroxy-C₂-C₂₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen der Formel I, und
(B) 0,1 bis 10 Mol-%, bezogen auf (A) und (B), einer Verbindung ausgewählt unter Phenol, das gegebenenfalls mit Resten, ausgewählt unter C₁-C₉-Alkyl und Bydroxy, substituiert ist; C₁-C₄-Alkanen, die mit zwei oder drei Phenol-Gruppen substituiert sind; Di(hydroxyphenyl)sulfonen oder Mischungen davon,
mit Formaldehyd oder Formaldehyd-liefernden Verbindungen, wobei das Molverbältnis von Melaminen zu Formaldehyd im Bereich von 1:1,15 bis 1:4,5 liegt.

6. Isoliermaterial nach einem der vorhergehenden Ansprüche, wobei die Poly(alkylenterephthalat)fasern b) ausgewählt sind unter Poly(ethylenterephthalat)fasern, Poly(butylenterephthalat)fasern und Mischungen davon.

7. Isoliermaterial nach Anspruch 6, wobei die Poly(ethylenterephthalat)fasern b) Bikomponentenfasern mit Mantel-/KernAufbau, umfassend einen Polyesterkern und einen Copolyestermantel, sind.

8. Isoliermaterial nach Anspruch 7, wobei die Schmelztemperatur des Kerns der Bikomponentenfasern b) 200 bis 300 °C, bevorzugt 230 bis 280 °C, beträgt und die Schmelztemperatur des Mantels 80 bis 150 °C, bevorzugt 100 bis 130 °C, beträgt.

9. Isoliermaterial nach einem der Ansprüche 7 oder 8, wobei der Titer der Einzelfaser der Bikomponentenfasern b) 1 bis 20 dtex, bevorzugt 2 bis 15 dtex, beträgt.

10. Verfahren zur Herstellung von Isoliermaterial in Form von Matten mit einer Dichte im Bereich von 10 bis 150 gl⁻¹ nach einem der vorhergehenden Ansprüche, **dadurch gekennzeichnet, dass** man
i) die Komponenten a), b) sowie gegebenenfalls c) und/oder d), gegebenenfalls nach einer Vorbehandlung, mischt, gewünschtenfalls kardiert und zu einer Matte ablegt,
ii) die Matte erhitzt und
iii)die getemperte Matte gegebenenfalls zurechtschneidet und/ oder beschichtet.

11. Verfahren nach Anspruch 10, **dadurch gekennzeichnet, dass** man als Komponente b) eine Bikomponentenfasern mit Mantel-/Kern-Aufbau nach einem der Ansprüche 7 bis 9 einsetzt, und die Temperatur in Schritt ii) höher als die Schmelztemperatur des Mantels und niedriger als die Schmelztemperatur des Kerns ist.

## Claims

1. The use of modified melamine resin fibers obtainable by condensation of a mixture comprising
(A) from 90 to 99.9 mol% of a mixture comprising
(a) from 30 to 99.9 mol% of melamine and
(b) from 1.0 to 70 mol% of a substituted melamine of the general formula I 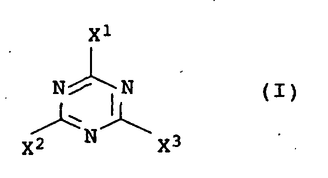
where X¹, X² and X³ are each selected from -NH₂, -NHR¹ and -NR¹R², subject to the proviso that X¹, X² and X³ are not all -NH₂, and R¹ and R² are independently selected from hydroxy-C₂-C₂₀-alkyl, hydroxy-C₂-C₄-alkyl-(oxa-C₂-C₄-alkyl)ₙ, where n is from 1 to 5, and amino-C₂-C₁₂-alkyl, or mixtures of melamines of formula I, and
(B) from 0.1 to 10 mol%, based on (A) and (B), of a compound selected from phenols which are unsubstituted or substituted by radicals selected from C₁-C₉-alkyl and hydroxyl, C₁-C₄-alkanes substituted by two or three phenol groups, di(hydroxyphenyl) sulfones and mixtures thereof,
with formaldehyde or formaldehyde-supplying compounds in a molar ratio of melamines to formaldehyde within the range from 1:1.15 to 1:4.5, for producing thermal and/or acoustic insulating material in the form of mats having a density within the range from 10 to 150 gl⁻¹.

2. The use as claimed in claim 1 together with polyalkylene terephthalate fibers.

3. An insulating material in the form of mats having a density within the range from 10 to 150 gl⁻¹ comprising
a) from 5 to 95 % by weight of melamine resin fibers, and
b) from 5 to 95 % by weight of polyalkylene terephthalate fibers.

4. An insulating material as claimed in claim 3, further comprising c) up to 30% by weight of further fibers and/or d) up to 20% by weight of additives.

5. An insulating material as claimed in either of the preceding claims, wherein the melamine resin fibers are modified and obtainable by condensation of a mixture comprising
(A) from 90 to 99.9 mol% of a mixture comprising
(a) from 30 to 99.9 mol% of melamine and
(b) from 1.0 to 70 mol% of a substituted melamine of the general formula I 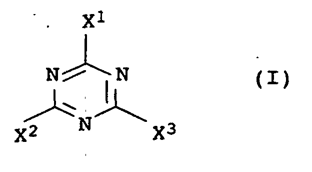 where X¹, X² and X³ are each selected from -NH₂, -NHR¹ and -NR¹R², subject to the proviso that X¹, X² and X³ are not all -NH₂, and R¹ and R² are independently selected from hydroxy-C₂-C₂₀-alkyl, hydroxy-C₂-C₄-alkyl-(oxa-C₂-C₄-alkyl)ₙ, where n is from 1 to 5, and amino-C₂-C₁₂-alkyl, or mixtures of melamines of formula I, and
(B) from 0.1 to 10 mol%, based on (A) and (B), of a compound selected from phenols which are unsubstituted or substituted by radicals selected from C₁-C₉-alkyl and hydroxyl, C₁-C₄-alkanes substituted by two or three phenol groups, di(hydroxyphenyl) sulfones and mixtures thereof,
with formaldehyde or formaldehyde-supplying compounds in a molar ratio of melamines to formaldehyde within the range from 1:1.15 to 1:4.5.

6. An insulating material as claimed in any preceding claim, wherein the polyalkylene terephthalate fibers b) are selected from polyethylene terephthalate fibers, polybutylene terephthalate fibers and mixtures thereof.

7. An insulating material as claimed in claim 6, wherein the polyethylene terephthalate fibers b) are bicomponent fibers having a core-sheath construction comprising a polyester core and a copolyester sheath.

8. An insulating material as claimed in claim 7, wherein the melting temperature of the core of the bicomponent fibers b) is within the range from 200 to 300°C, preferably within the range from 230 to 280°C, and the melting temperature of the sheath is within the range from 80 to 150°C, preferably within the range from 100 to 130 C.

9. An insulating material as claimed in either of claims 7 and 8, wherein the individual fiber linear density of the bicomponent fibers b) is within the range from 1 to 20 dtex, preferably within the range from 2 to 15 dtex.

10. A process for producing an insulating material in the form of mats having a density within the range from 10 to 150 gl⁻¹ as claimed in any of the preceding claims, which comprises
i) the components a), b) and optionally c) and/or d), optionally after a pretreatment, being mixed, optionally carded and laid down to form a mat,
ii) the mat being heated, and
iii) the tempered mat being optionally cut to size and/or coated.

11. A process as claimed in claim 10, wherein component b) is a core-sheath bicomponent fiber as set forth in any of claims 7 to 9 and the temperature in step ii) is higher than the melting temperature of the sheath and lower than the melting temperature of the core.

## Revendications

1. Utilisation de fibres de résine de mélaminique modifiée que l'on peut obtenir par condensation d'un mélange contenant
(A) 90 à 99,9% molaires d'un mélange comportant
(a) 30 à 99,9% molaires de mélamine et
(b) 1,0 à 70% molaires d'une mélamine substituée de la formule générale I 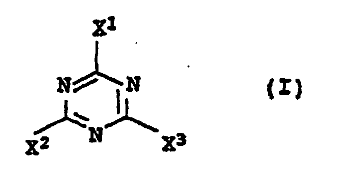 dans laquelle X¹, X² et X³ sont choisis parmi -NH₂, -NHR¹ et -NR¹R², avec X¹, X² et X³ n'étant pas simultanément - NH₂, et où R¹ et R² sont indépendamment l'un de l'autre choisis parmi les radicaux hydroxyalkyle(C₂-C₂₀), hydroxyalkyle(C₂-C₄)-[(oxa-alkyle(C₂-C₄)]ₙ, avec n = 1 à 5, et aminoalkyle(C₂-C₁₂),
ou des mélanges de mélamines de la formule I, et
(B) 0,1 à 10% molaires, par rapport à (A) et (B), d'un composé choisi parmi le phénol, éventuellement substitué par des restes choisis parmi des radicaux alkyle en C₁ à C₉ et hydroxyle; des alcanes en C₁ à C₄, substitués par deux ou trois groupes phénol; des di(hydroxyphényl)sulfones, ou leurs mélanges,
avec du formaldéhyde ou des composés libérant du formaldéhyde, le rapport molaire des mélamines au formaldéhyde étant de l'ordre de 1:1,15 à 1:4,5, pour la préparation de matériaux isolant sous forme de mats d'une masse volumique de l'ordre de 10 à 150 gl⁻¹ aux fins d'isolation thermique et/ou acoustique.

2. Utilisation selon la revendication 1, en même temps que des fibres de poly(alkyléne-téréphtalate).

3. Matériau isolant sous forme de mats d'une masse volumique de l'ordre de 10 à 150 gl⁻¹, contenant:
a) de 5 à 95% en poids de fibres de résine mélaminique et
b) de 5 à 95% en poids de fibres de poly(alkylène-téréphtalate).

4. Matériau isolant selon la revendication 3, contenant
c) jusqu'à 30% en poids d'autres fibres et/ou d) jusqu'à 20% en poids d'additifs.

5. Matériau isolant selon l'une des revendications qui précèdent, où les fibres de résine de mélamine sont modifiées et peuvent être obtenues par condensation d'un mélange contenant
(A) 90 à 99,9% molaires d'un mélange comportant
(a) 30 à 99,9% molaires de mélamine et
(b) 1,0 à 70% molaires d'une mélamine substituée de la formule générale I 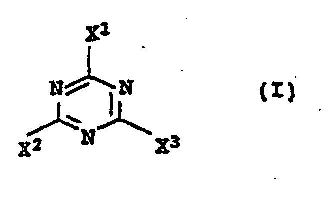
dans laquelle X¹, X² et X³ sont choisis parmi -NH₂, -NHR¹ et -NR¹R², avec X¹, X² et X³ n'étant pas simultanément - NH₂, et où R¹ et R² sont indépendamment l'un de l'autre choisis parmi les radicaux hydroxyalkyle(C₂-C₂₀), hydroxyalkyle(C₂-C₄)-[(oxa-alkyle(C₂-C₄)]ₙ, avec n = 1 à 5, et aminoalkyle(C₂-C₁₂),
ou des mélanges de mélamines de la formule I, et
(B) 0,1 à 10% molaires, par rapport à (A) et (B), d'un composé choisis parmi le phénol, éventuellement substitué par des restes choisis parmi des radicaux alkyle en C₁ à C₉ et hydroxyle; des alcanes en C₁ à C₄, substitués par deux ou trois groupes phénol; des di(hydroxyphényl)sulfones, ou leurs mélanges,
avec du formaldéhyde ou des composés libérant du formaldéhyde, le rapport molaire des mélamines au formaldéhyde étant de l'ordre de 1:1,15 à 1:4,5.

6. Matériau isolant selon l'une des revendications pui précèdent, où les fibres de poly(alkylène-téréphtalate) b) sont choisies parmi des fibres de poly(éthylène téréphtalate), des fibres de poly(butylène téréphtalate) et leurs mélanges.

7. Matériau isolant selon la revendication 6, où les fibres de poly(alkylène-téréphtalate) b) sont des fibres à deux composants à structure enveloppe/noyau, comportant un noyau de polyester et une enveloppe de copolyester.

8. Matériau isolant selon la revendication 7, où la température de fusion du noyau des fibres à deux composants b) est de 200 à 300°C, de préférence de 230 à 280°C, et où la température de fusion de l'enveloppe est de 80 à 150°C, de préférence de 100 à 130°C.

9. Matériau isolant selon l'une des revendications 7 ou 8, où le titre des fibres individuelles des fibres à deux composants b) est de 1 à 20 dtex, de préférence de 2 à 15 dtex.

10. Procédé de préparation de matériau isolant sous forme de mats d'une masse volumique de l'ordre de 10 à 150 gl⁻¹ selon l'une des revendications qui précédent, **caractérisé en ce que**
i) les composants a), b) et éventuellement c) et/ou d) sont mélangés, éventuellement après un prétraitement, éventuellement cardés et déposés sous forme de mat,
ii) les mats sont chauffés, et
iii) les mats étuvés sont éventuellement débités et/ou enrobés.

11. Procédé selon la revendication 10, **caractérisé en ce que** l'on met en oeuvre, comme composant b), des fibres à deux composants à structure enveloppe/noyau selon l'une des revendications 7 à 9, et que la température dans l'étape (ii) est supérieure à la température de fusion de l'enveloppe et inférieure à la température de fusion du noyau.
